# EUROPEAN PATENT APPLICATION

(11) **EP 4 527 707 A2**
(43) Date of publication of application: **26.03.2025**
(21) Application number: 25156958.8
(22) Date of filing: 25.09.2018
(51) Int. Cl.: B60W 50/08

(54) **MULTIPLE DRIVING MODES FOR AUTONOMOUS VEHICLES**

(30) Priority: 27.09.2017 US 201715716872
(62) Divisional of application: 18863511.4
(71) Applicant: Waymo LLC, Mountain View, CA 94043 (US)
(72) Inventor: STARK, Ethan, Mountain View, CA 94043 (US); EGNOR, Daniel Trawick, Mountain View, CA 94043 (US); CASH, Ryan, Mountain View, CA 94043 (US); PATTERSON, Katharine, Mountain View, CA 94043 (US)
(74) Representative: Chettle, John Edward

(57) **Abstract**

Aspects of the present disclosure relate to vehicle systems including one or more control computing devices configured to send commands to one or more actuators of a vehicle 100 in order to control deceleration, acceleration, and steering. The vehicle may include user input devices for allowing a driver to control the one or more actuators in order to control deceleration, acceleration, and steering. The computing devices are configured to operate in a manual driving mode where commands from the control computing devices are invalidated and ignored by the actuators, a first autonomous driving mode where the control computing devices are configured to send the commands to control the actuators and inputs from the user input devices are prioritized over the commands; and a second autonomous driving mode wherein the control computing devices are configured to send the commands to control the actuators and inputs from commands are prioritized over inputs from the user input devices.

## Description

### CROSS-REFERENCE TO RELATED APPLICATIONS

The present application is a continuation of U.S. Patent Application No. 15/716,872, filed September 27, 2017, the disclosure of which is hereby incorporated herein by reference.

### BACKGROUND

Some vehicles may operate in various modes which provide different levels of control to a driver. For instance, typical vehicles may operate in manual driving modes, where a human operator or driver controls acceleration, deceleration, and steering of the vehicle as well as semi-autonomous driving mode, such as cruise control, where a computer of the vehicle controls acceleration and deceleration while a driver controls steering, etc. In some instances, these vehicles may also operate in autonomous driving modes where the computer of the vehicle controls all of braking, all of the acceleration, deceleration and steering of the vehicle without continuous input from a driver or passenger. In the autonomous driving mode, the passenger may provide some initial input, such as a destination location, and the vehicle maneuvers itself to that destination.

### BRIEF SUMMARY

One aspect of the disclosure provides a system. The system includes one or more control computing devices configured to send commands to one or more actuators of a vehicle in order to control deceleration, acceleration, and steering of the vehicle. The vehicle includes one or more user input devices for allowing a driver to control the one or more actuators in order to control deceleration, acceleration, and steering of the vehicle. The one or more control computing devices are configured to allow the vehicle to operate the vehicle in a manual driving mode wherein a human operator controls the steering, braking and acceleration of the vehicle, a first autonomous driving mode wherein the one or more control computing devices are configured to send the commands to control one or more actuators and wherein inputs from the one or more user input devices are prioritized over the commands, and a second autonomous driving mode wherein the one or more control computing devices are configured to send the commands to control the one or more actuators and wherein inputs from commands are prioritized over the inputs from the one or more user input devices.

In one example, the one or more computing devices are configured such that the first autonomous driving mode includes different requirements for entering than the second autonomous driving mode. In another example, the one or more computing devices are configured to prevent transitions from the manual driving mode to the second autonomous driving mode when the vehicle is in motion. In another example, the one or more computing devices are configured such that the first autonomous driving mode includes different requirements for transitioning to the manual driving mode than the second autonomous driving mode. In another example, the one or more computing devices are configured to transition from the first autonomous driving mode to the manual driving mode when any of the one or more actuators is operating in the manual driving mode. In this example, the one or more computing devices are configured such that when any of the one or more actuators is operating in the manual driving mode, the commands are ignored. In addition or alternatively, the one or more actuators include a deceleration actuator configured to cause the vehicle to deceleration, an acceleration actuator configured to cause the vehicle to accelerate, and a steering actuator configured to change an orientation of the vehicle.

In another example, the one or more computing devices are configured to prevent direct transitions from the first autonomous driving mode to the second autonomous driving mode. In another example, the one or more computing devices are configured to prevent direct transitions from the second autonomous driving mode to the first autonomous driving mode. In another example, the one or more computing devices are configured to operate the vehicle in a third autonomous driving mode which allows the vehicle to be serviced. In another example, the one or more computing devices are configured to operate the vehicle in the third autonomous driving mode based on a current location of the vehicle relative to a depot location. In this example, the one or more computing devices are configured to operate the vehicle in the third autonomous driving mode based whether the vehicle is at a specific location within the depot location. In addition or alternatively, the one or more computing devices are configured to automatically transition the vehicle into the third autonomous driving mode when the vehicle reaches the depot location. In addition or alternatively, the one or more computing devices are configured to prevent the vehicle from leaving the depot location until the one or more computing devices receive an instruction from a dispatching server computing device indicating that the vehicle is needed for providing transportation services.

In another example, the one or more computing devices are configured to operate the vehicle in a first configuration of the second autonomous driving mode where the vehicle provides transportation services to passengers. In another example, the one or more computing devices are configured to operate the vehicle in a second configuration of the second autonomous driving mode where the vehicle provides transportation services using restrictions defined by a current status of the vehicle. In another example, the one or more computing devices are configured to allow transitions into the second autonomous driving mode only when a door of the vehicle is open. In another example, the manual driving mode is configured such that commands from the one or more control computing devices are invalidated and ignored by the one or more actuators. In another example, system includes the one or more user input devices. In another example, system includes the vehicle.

### BRIEF DESCRIPTION OF THE DRAWINGS

FIGURE 1 is a functional diagram of an example vehicle in accordance with an exemplary embodiment.
FIGURE 2 is an example of map information in accordance with aspects of the disclosure.
FIGURE 3 is an example external view of a vehicle in accordance with aspects of the disclosure.
FIGURE 4 is a pictorial diagram of an example system in accordance with an exemplary embodiment.
FIGURE 5 is a functional diagram of the system of FIGURE 4 in accordance with aspects of the disclosure.
FIGURE 6 is an example bird's eye view of a geographic area in accordance with aspects of the disclosure.
FIGURE 7 is an example bird's eye view of the geographic area of FIGURE 6 in accordance with aspects of the disclosure.
FIGURE 8 is an example bird's eye view of the geographic area of FIGURE 6 in accordance with aspects of the disclosure.
FIGURE 9 is an example bird's eye view of the geographic area of FIGURE 6 in accordance with aspects of the disclosure.
FIGURE 10 is an example flow diagram in accordance with aspects of the disclosure.

### DETAILED DESCRIPTION

### OVERVIEW

Autonomous vehicles or vehicles having an autonomous driving mode may have many different modes of operation ranging from manual (where a driver controls braking, acceleration and steering) to fully autonomous (where a computer controls deceleration, acceleration and steering) and various modes there between. In such systems, a driver may switch between modes, for instance from autonomous to manual, by providing input at an input device, such as a steering wheel, brake pedal, accelerator pedal, buttons, etc. The vehicle's control computing devices may then transition control of deceleration, acceleration, and steering to the driver.

In some cases, however, even where there is a passenger in the vehicle, it may not always be appropriate to switch directly from an autonomous driving mode to a manual driving mode. For instance, a passenger may not be able to take control of the vehicle, due to age, disability, being asleep, or otherwise not paying attention. To avoid such situations, an autonomous vehicle may have multiple autonomous driving modes. For example, the autonomous vehicle may include one or more autonomous driving modes, and if available, a typical manual driving mode.

In a manual driving mode, a driver is able to control the deceleration, acceleration, and steering of a vehicle at the input devices. In a first autonomous driving mode, the control computing devices may expect that a driver is presently in the vehicle and capable of controlling the vehicle in the manual driving mode. The first autonomous driving mode may also have a plurality of different sub-modes or configurations which allows for different levels of autonomy in different environments. The first autonomous driving mode may also include a configuration with additional modifications to allow for safe testing of the vehicle when a test driver is present.

In a second autonomous driving mode, the control computing devices may expect that a driver is not presently in the vehicle and capable of controlling the vehicle in the manual driving mode. As with the first autonomous driving mode, the second autonomous driving mode may include a plurality of different sub-modes or configurations for providing transportation services. The second autonomous driving mode may also include a configuration for testing the vehicle.

In some instances, the vehicle may include a third autonomous driving mode that allows for service or software changes to the vehicle. This third autonomous driving mode may be considered a "depot" mode that allows an operator to interact with the vehicle and address any work orders generated for the vehicle by the server computing devices 410. The third autonomous driving mode may include a geo-fencing aspect that prevents or limits the ability for the vehicle to be serviced when the vehicle's current location is not at or within a predetermined distance of a depot or a specific location within a depot.

As noted above, the vehicle's computing devices may be configured to prevent "accidental engages" or "accidental disengages" of the autonomous driving modes. This may include limiting specific types of transitions, requiring specific conditions of the vehicle, using geo-fencing, and/or requiring specific authorization.

The features described herein provide for safe and effective transitions between different autonomous driving modes and between different autonomous driving modes and a manual driving mode. The first autonomous driving mode may be especially useful when testing the vehicle (i.e. when a test driver is in the vehicle) and when a driver is able to take control of the vehicle in the event of an uncomfortable or emergency situation. The second autonomous driving mode may be especially useful in situations in which there is no passenger in the vehicle or any passengers are not be able to take control of the vehicle, due to age, disability, being asleep, or otherwise not paying attention.

### EXAMPLE SYSTEMS

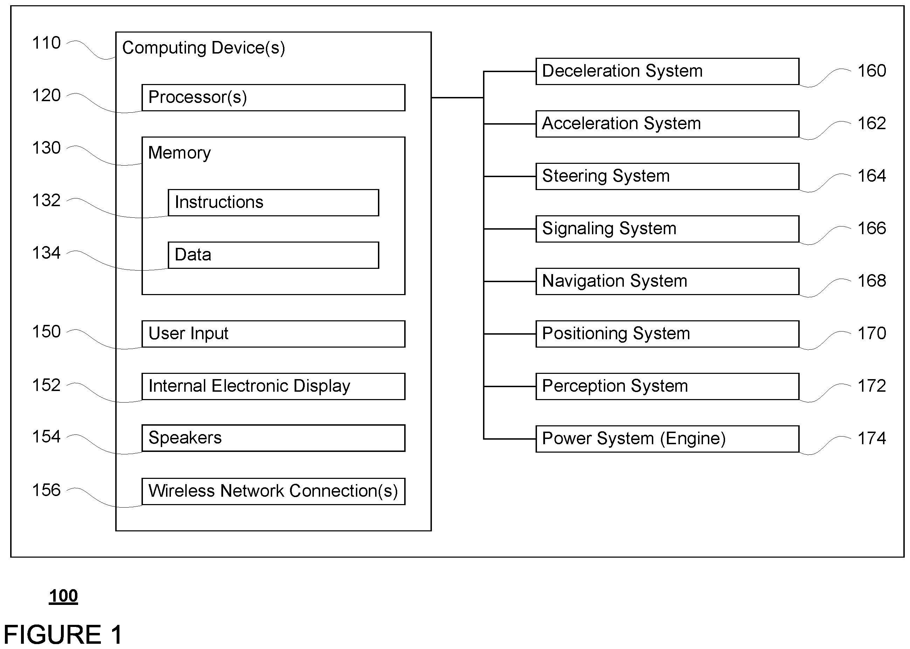

As shown in FIGURE 1, a vehicle 100 in accordance with one aspect of the disclosure includes various components. While certain aspects of the disclosure are particularly useful in connection with specific types of vehicles, the vehicle may be any type of vehicle including, but not limited to, cars, trucks, motorcycles, buses, recreational vehicles, etc. The vehicle may have one or more control computing devices, such as computing device 110 containing one or more processors 120, memory 130 and other components typically present in general purpose computing devices.

The memory 130 stores information accessible by the one or more processors 120, including instructions 134 and data 132 that may be executed or otherwise used by the processor 120. The memory 130 may be of any type capable of storing information accessible by the processor, including a computing device-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 134 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 132 may be retrieved, stored or modified by processor 120 in accordance with the instructions 134. For instance, although the claimed subject matter is not limited by any particular data structure, the data may be stored in computing device registers, in a relational database as a table having a plurality of different fields and records, XML documents or flat files. The data may also be formatted in any computing device-readable format.

The one or more processor 120 may be any conventional processors, such as commercially available CPUs. Alternatively, the one or more processors may be a dedicated device such as an ASIC or other hardware-based processor. Although FIGURE 1 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing device 110. Accordingly, references to a processor or computing device will be understood to include references to a collection of processors or computing devices or memories that may or may not operate in parallel.

Computing device 110 may all of the components normally used in connection with a computing device such as the processor and memory described above as well as a user input 150 (e.g., a mouse, keyboard, touch screen and/or microphone) and various electronic displays (e.g., a monitor having a screen or any other electrical device that is operable to display information). In this example, the vehicle includes an internal electronic display 152 as well as one or more speakers 154 to provide information or audio visual experiences. In this regard, internal electronic display 152 may be located within a cabin of vehicle 100 and may be used by computing device 110 to provide information to passengers within the vehicle 100.

Computing device 110 may also include one or more wireless network connections 156 to facilitate communication with other computing devices, such as the client computing devices and server computing devices described in detail below. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

In one example, computing device 110 may be an autonomous driving computing system incorporated into vehicle 100. The autonomous driving computing system may capable of communicating with various components of the vehicle in order to control the movement of vehicle 100 according to primary vehicle control code of memory 130. For example, returning to FIGURE 1, computing device 110 may be in communication with various systems of vehicle 100, such as deceleration system 160, acceleration system 162, steering system 164, signaling system 166, navigation system 168, positioning system 170, perception system 172, and power system 174 in order to control the movement, speed, etc. of vehicle 100 in accordance with the instructions 134 of memory 130. Again, although these systems are shown as external to computing device 110, in actuality, these systems may also be incorporated into computing device 110, again as an autonomous driving computing system for controlling vehicle 100.

As an example, computing device 110 may interact with one or more actuators of the deceleration system 160 and/or acceleration system 162, such as brakes, accelerator pedal, and/or the power system 174 (i.e. an engine or motor of vehicle 100), in order to control the speed of the vehicle. Similarly, one or more actuators of the steering system 164, such as a steering wheel, steering shaft, and/or pinion and rack in a rack and pinion system, may be used by computing device 110 in order to control the direction of vehicle 100. For example, if vehicle 100 is configured for use on a road, such as a car or truck, the steering system may include one or more actuators to control the angle of wheels to turn the vehicle. Signaling system 166 may be used by computing devices 110 in order to signal the vehicle's intent to other drivers or vehicles, for example, by lighting turn signals or brake lights when needed.

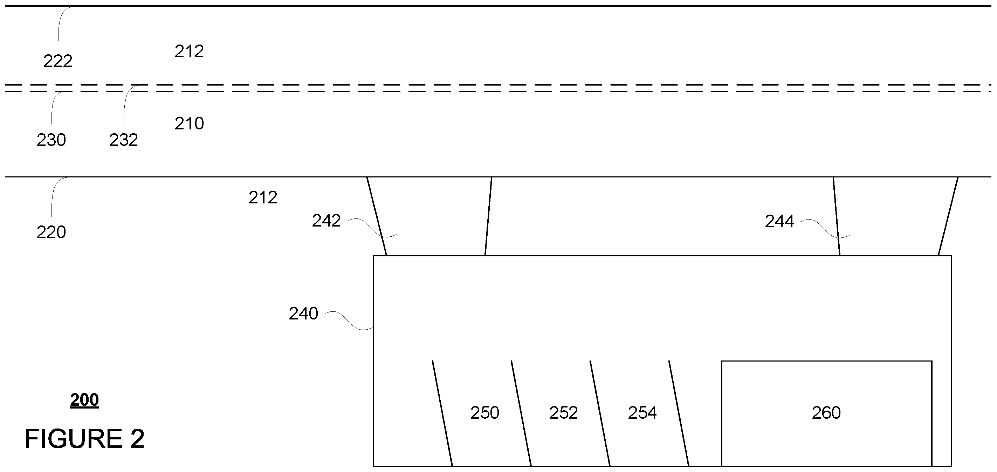

Navigation system 168 may be used by computing device 110 in order to determine and follow a route to a location. In this regard, the navigation system 168 and/or data 132 may store detailed map information, e.g., highly detailed maps identifying the shape and elevation of roadways, lane lines, intersections, crosswalks, speed limits, traffic signals, buildings, signs, real time traffic information, vegetation, or other such objects and information. For instance, FIGURE 2 is an example of map information 200. In this example, the map information 200 includes the shape and location of lanes 210, 212, bounded by lane lines 220, 222, 230, 232. As noted above, the map information may include numerous other features not depicted in this example.

As discussed further below, the map information may also include information identifying depot locations. The depots may be fixed locations which include parking areas or spaces for the vehicles. Some depots may also include one or more human operators who may manage work orders and vehicle transitions as discussed further below. These depots may have different characteristics, such as availability, intake bandwidth, services available, etc. In addition, some depots may have features such as shade, refueling or charging stations, cleaning services, and maintenance services. In some examples, the map information may also identity the physical to features of the depots in order to allow the vehicle to operate in an autonomous driving mode within the depot. In this regard, the map information may also identify specific areas of the depot, such as a maintenance area, that can be used to automatically transition the vehicle to a specific autonomous driving mode as discussed further below. For instance, map information 200 includes a depot 240 with entrance 242 and exit 244. The map information also identifies features within the depot 240, such as parking spots 250-254 as well as maintenance area 260 for performing various maintenance, such as cleaning, oil changes, refueling, charging, etc., on the vehicle 100.

Positioning system 170 may be used by computing device 110 in order to determine the vehicle's relative or absolute position on a map or on the earth. For example, the position system 170 may include a GPS receiver to determine the device's latitude, longitude and/or altitude position. Other location systems such as laser-based localization systems, inertial-aided GPS, or camera-based localization may also be used to identify the location of the vehicle. The location of the vehicle may include an absolute geographical location, such as latitude, longitude, and altitude as well as relative location information, such as location relative to other cars immediately around it which can often be determined with less noise that absolute geographical location.

The positioning system 170 may also include other devices in communication with computing device 110, such as an accelerometer, gyroscope or another direction/speed detection device to determine the direction and speed of the vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing device 110, other computing devices and combinations of the foregoing.

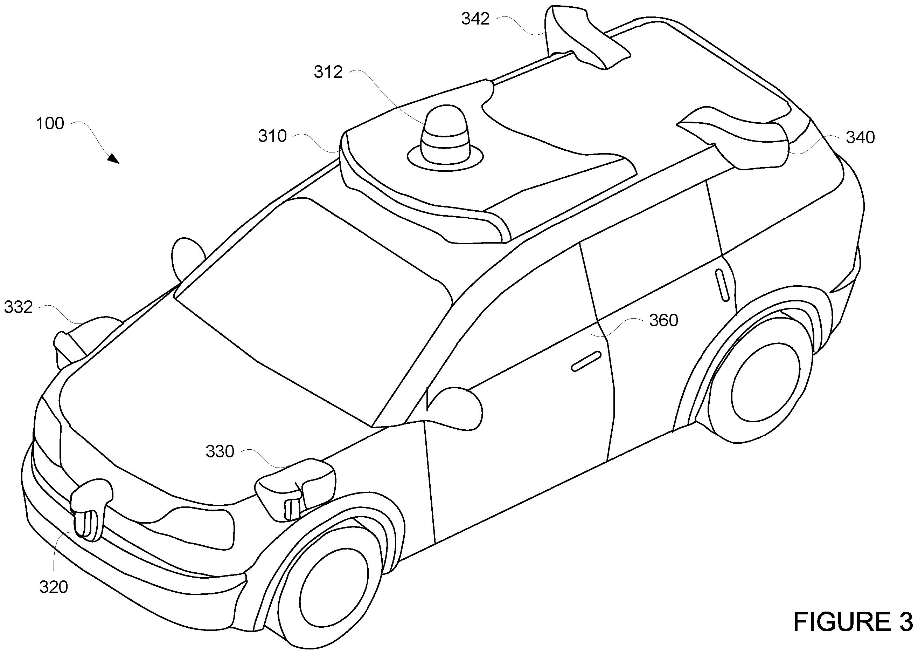

The perception system 172 also includes one or more components for detecting objects external to the vehicle such as other vehicles, obstacles in the roadway, traffic signals, signs, trees, etc. For example, the perception system 172 may include lasers, sonar, radar, cameras and/or any other detection devices that record data which may be processed by computing device 110. In the case where the vehicle is a passenger vehicle such as a minivan, the minivan may include a laser or other sensors mounted on the roof or other convenient location. For instance, FIGURE 3 is an example external view of vehicle 100. In this example, roof-top housing 310 and dome housing 312 may include a lidar sensor as well as various cameras and radar units. In addition, housing 320 located at the front end of vehicle 100 and housings 330, 332 on the driver's and passenger's sides of the vehicle may each store a lidar sensor. For example, housing 330 is located in front of driver door 360. Vehicle 100 also includes housings 340, 342 for radar units and/or cameras also located on the roof of vehicle 100. Additional radar units and cameras (not shown) may be located at the front and rear ends of vehicle 100.

The computing device 110 may control the direction and speed of the vehicle by controlling various components. By way of example, computing device 110 may navigate the vehicle to a destination location completely autonomously using data from the detailed map information and navigation system 168. Computing device 110 may use the positioning system 170 to determine the vehicle's location and perception system 172 to detect and respond to objects when needed to reach the location safely. In order to do so, computing device 110 may cause the vehicle to accelerate (e.g., by increasing fuel or other energy provided to the engine by acceleration system 162), decelerate (e.g., by decreasing the fuel supplied to the engine, changing gears, and/or by applying brakes by deceleration system 160), change direction (e.g., by turning the front or rear wheels of vehicle 100 by steering system 164), and signal such changes (e.g., by lighting turn signals of signaling system 166). Thus, the acceleration system 162 and deceleration system 160 may be a part of a drivetrain that includes various components between an engine of the vehicle and the wheels of the vehicle. Again, by controlling these systems, computing device 110 may also control the drivetrain of the vehicle in order to maneuver the vehicle autonomously.

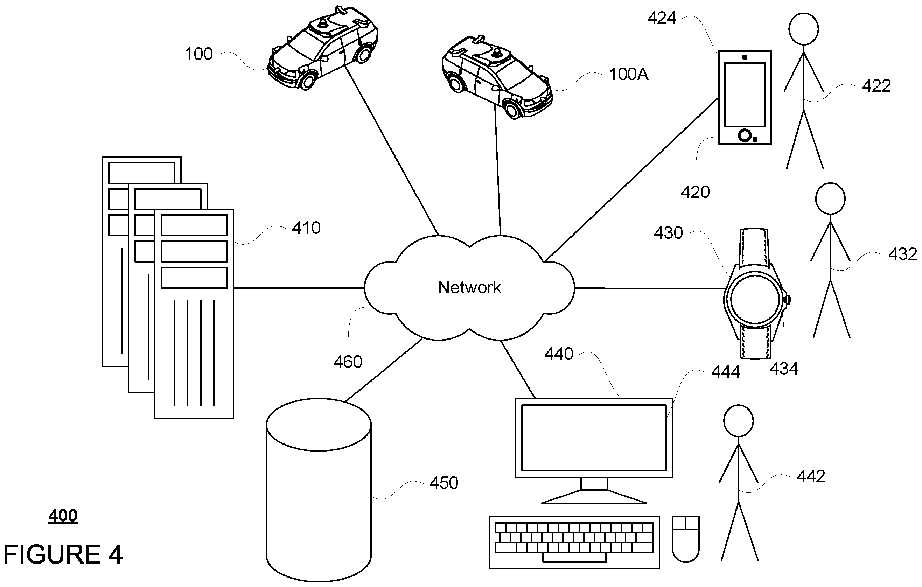

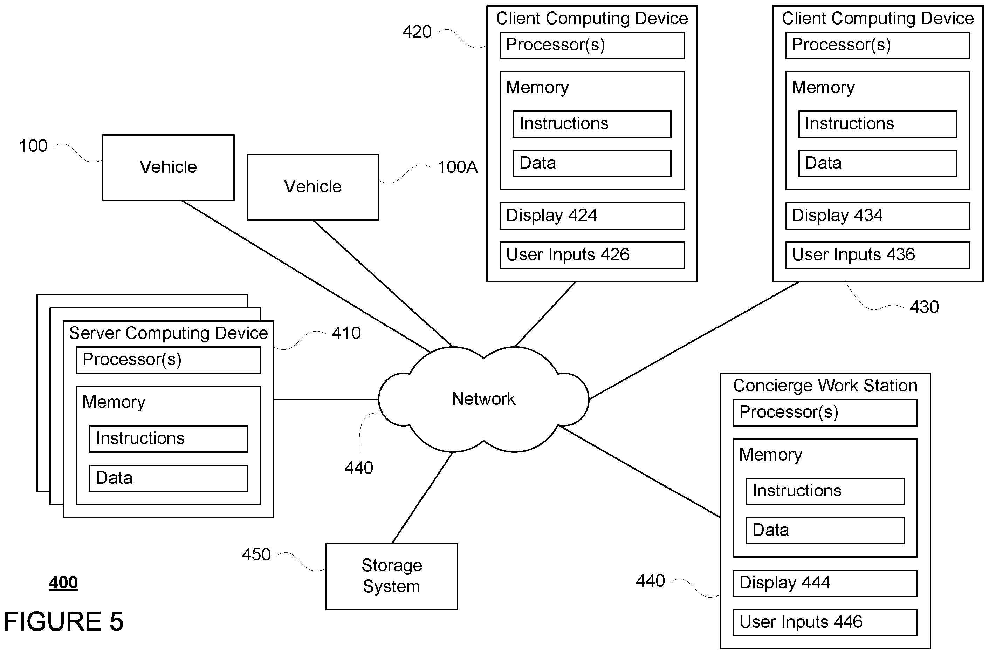

Computing device 110 of vehicle 100 may also receive or transfer information to and from other computing devices. FIGURES 4 and 5 are pictorial and functional diagrams, respectively, of an example system 400 that includes a plurality of computing devices 410, 420, 430, 440 and a storage system 450 connected via a network 460. System 400 also includes vehicle 100, and vehicle 100A which may be configured similarly to vehicle 100. Although only a few vehicles and computing devices are depicted for simplicity, a typical system may include significantly more.

As shown in FIGURE 4, each of computing devices 410, 420, 430, 440 may include one or more processors, memory, data and instructions. Such processors, memories, data and instructions may be configured similarly to one or more processors 120, memory 130, data 132, and instructions 134 of computing device 110.

The network 460, and intervening nodes, may include various configurations and protocols including short range communication protocols such as Bluetooth, Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, one or more computing devices 110 may include a server having a plurality of computing devices, e.g., a load balanced server farm, that exchange information with different nodes of a network for the purpose of receiving, processing and transmitting the data to and from other computing devices. For instance, one or more computing devices 410 may include one or more server computing devices that are capable of communicating with computing device 110 of vehicle 100 or a similar computing device of vehicle 100A as well as computing devices 420, 430, 440 via the network 460. For example, vehicles 100 and 100A may be a part of a fleet of vehicles that can be dispatched by server computing devices to various locations. In this regard, the vehicles of the fleet may periodically send the server computing devices location information provided by the vehicle's respective positioning systems and the one or more server computing devices may track the locations of the vehicles.

In addition, server computing devices 410 may use network 460 to transmit and present information to a user, such as user 422, 432, 442 on a display, such as displays 424, 434, 444 of computing devices 420, 430, 440. In this regard, computing devices 420, 430, 440 may be considered client computing devices.

As shown in FIGURE 4, each client computing device 420, 430, 440 may be a personal computing device intended for use by a user 422, 432, 442, and have all of the components normally used in connection with a personal computing device including a one or more processors (e.g., a central processing unit (CPU)), memory (e.g., RAM and internal hard drives) storing data and instructions, a display such as displays 424, 434, 444 (e.g., a monitor having a screen, a touch-screen, a projector, a television, or other device that is operable to display information), and user input devices 426, 436, 446 (e.g., a mouse, keyboard, touchscreen or microphone). The client computing devices may also include a camera for recording video streams, speakers, a network interface device, and all of the components used for connecting these elements to one another.

Although the client computing devices 420, 430, and 440 may each comprise a full-sized personal computing device, they may alternatively comprise mobile computing devices capable of wirelessly exchanging data with a server over a network such as the Internet. By way of example only, client computing device 420 may be a mobile phone or a device such as a wireless-enabled PDA, a tablet PC, a wearable computing device or system, or a netbook that is capable of obtaining information via the Internet or other networks. In another example, client computing device 430 may be a wearable computing system, shown as a wrist watch as shown in FIGURE 4. As an example the user may input information using a small keyboard, a keypad, microphone, using visual signals with a camera, or a touch screen.

In some examples, client computing device 440 may be a concierge work station used by an administrator to provide concierge services to users such as users 422 and 432. For example, user 442 may be a concierge who uses the concierge work station 440 to communicate via a telephone call or audio connection with users through their respective client computing devices or vehicles 100 or 100A in order to facilitate the safe operation of vehicles 100 and 100A and the safety of the users as described in further detail below. Although only a single concierge work station 440 is shown in FIGURES 4 and 5, any number of such work stations may be included in a typical system.

As with memory 130, storage system 450 can be of any type of computerized storage capable of storing information accessible by the server computing devices 410, such as a hard-drive, memory card, ROM, RAM, DVD, CD-ROM, write-capable, and read-only memories. In addition, storage system 450 may include a distributed storage system where data is stored on a plurality of different storage devices which may be physically located at the same or different geographic locations. Storage system 450 may be connected to the computing devices via the network 460 as shown in FIGURES 4 and 5, and/or may be directly connected to or incorporated into any of the computing devices 110, 410, 420, 430, 440, etc.

The memory 130 of computing device 110 may store configuration instructions to allow the operating vehicle 100 to operate in different modes including a manual driving mode as well as one or more autonomous driving modes. In the manual driving mode, a driver is able to control the deceleration, acceleration, and steering of a vehicle at the input devices. In addition, vehicle 100 is configured via the configuration instructions such that commands from the control computing devices to control the actuators of the deceleration system 160, acceleration system 162, and steering system 164 are given no priority. In other words, in the manual driving mode, commands from the control computing device are invalid or ignored. In this way, the driver is guaranteed that the self-driving system will not interfere with operation of vehicle 100.

In a first autonomous driving mode, the control computing devices may expect that a driver is presently in vehicle 100 and capable of controlling the vehicle in the manual driving mode. In other words, the control computing devices are configured via the configuration instructions to readily allow transitions from the first autonomous driving mode to the manual driving mode. Vehicle 100 is also configured such that commands originating from the user input devices are given priority over commands from the control computing devices. In this regard, the driver is able to readily take control by using any of the input devices of vehicle 100. At the same time, the driver is guaranteed by both the control computing devices and the actuators that driver inputs will be prioritized over those of the control computing devices.

The first autonomous driving mode may also have a plurality of different sub-modes or configurations which allows for different levels of autonomy in different environments. For instance, the first autonomous driving mode may have a first configuration that allows for a fully-autonomous driving mode in specific areas of a pre-mapped environment, but semi-autonomous driving modes (e.g. where a driver controls speed and/or steering) everywhere else. A second configuration may allow a driver to adjust to increase the sensitivity of vehicle 100 to transitions to manual driving mode, for instance, where a driver prefers to more easily change vehicle 100 from the first autonomous driving mode to a semi-autonomous or the manual driving mode.

The first autonomous driving mode may also include a third configuration with additional modifications to allow for safe testing of vehicle 100 when a test driver is present. In order to have a redundant and more reliable means of guaranteeing test driver takeover ability, the transition between the first driverless mode and manual driving mode may be implemented in two different places: the control computing devices and at each actuator. The actuator software may be considered well vetted and fixed due to extensive testing and may not change very often. However, the software of the control computing devices may be changed and tested regularly. Because the actuators may transition to the manual driving mode independently of the control computing devices, commands from the control computing devices which are improper (i.e. those which continue even though there is a transition to the manual driving mode) are invalid and ignored. This transition may occur, for example, by having a driver (or test driver) take control of one or more of steering, braking, or acceleration. This allows for the safe and effective testing of new or updated software at the control computing devices.

In a second autonomous driving mode, the control computing devices may expect that a driver is not presently in vehicle 100 and capable of controlling vehicle 100 in the manual driving mode. In this configuration, both the actuators and control computing devices are configured via the configuration instruction to limit the impact of human inputs and transitions to the manual driving mode in order to guarantee the safety of passengers and vehicle 100. In other words, the first autonomous driving mode may be "easier" to enter than the second autonomous driving mode in order to limit use of the second driving mode to situations in which there is no driver capable of controlling vehicle 100 present.

As with the first autonomous driving mode, the second autonomous driving mode may include a plurality of different sub-modes or configurations. As an example, a first configuration may be a fully autonomous "driverless transportation service" mode discussed above which can be used to allow vehicle 100 to provide transportation services to passengers or users of the transportation service. This configuration may prevent vehicle 100 from starting a trip if the vehicle does not meet certain conditions, such as if the vehicle is dirty, a door is open, passengers are not sitting in seats and/or do not have seat belt bucked, the vehicle is overloaded (there is too much weight in the vehicle's seats and/or cargo compartments), etc. This configuration may also utilize a partition to prevent passengers from reaching manual controls (steering wheel, brake pedal, acceleration pedal, etc.).

This first configuration may also allow vehicle 100 to accept instruction from a dispatching server such as the server computing devices 410. For instance, when in the first configuration of the second autonomous driving mode, vehicles may be dispatched and/or staged by the server computing devices 410 to locations where a vehicle can safely wait to be assigned a trip. This may include sending a vehicle to a specific location, for instance, waiting at a specific shaded area near a mall, or sending a vehicle to a specific area, for instance, a specific square mile or more or less to drive around and wait for an assignment. Similarly, vehicles may be limited to trips in certain areas as discussed above using, for instance, the second configuration of the second driving mode or by sending vehicle 100 to that area and using geo-fencing to limit movements of the vehicle to within certain areas. This may allow the dispatching servers to confirm that vehicles are sent only where needed, and thereby allow more efficient staging and use of a fleet of vehicles.

A second configuration may be similar to the first configuration, but with some limitations determined based on the current status of vehicle 100. For instance, vehicle 100 may be prevented from entering specific regions, such as school zones, highways, etc., based on the vehicle's computing device's current software version, state of the vehicle's sensors (whether all are operating within normal parameters and/or whether the sensors were calibrated within some predetermined number of miles or period of time, such as 100 miles or more or less or 24 hours), etc. In this regard, if vehicle 100's sensors have not been calibrated at a depot within the last 100 miles or last 24 hours, the vehicle may not be able to drive on highways or in school zones. For instance, if certain sensors, such as radar or cameras, are not recently calibrated, the vehicle may need to avoid unprotected left turns or certain intersections having traffic lights at certain relative positions.

The second autonomous driving mode may also include a third configuration for testing vehicle 100. In this example, the computing devices may control vehicle 100 according to the configuration instructions as if the vehicle were operating in the first configuration. However, a test driver, rather than taking control of steering, acceleration, or deceleration, may use an "emergency stopping" button to immediately stop vehicle 100 in the event of a problem. In this regard, vehicle 100 may apply all braking power available immediately to stop the vehicle as quickly as possible. Generally, because such immediate stopping is not appropriate for when vehicle 100 is providing transportation services, the emergency stopping button may not be available (i.e. may be removable) when operating in the first configuration. In such cases, vehicle 100 may be stopped by a passenger using a pull over request via the passenger's client computing device or a pull over button of the vehicle.

In some instances, vehicle 100 may include a third autonomous driving mode that allows for service or software changes to the vehicle. For instance, this third autonomous driving mode may be considered a "depot" mode. This depot mode function similarly to the second autonomous mode, but also allow the vehicle to be transitioned out of the second autonomous driving mode and into a manual mode by an operator, which would otherwise not be allowed in the second autonomous mode. In the depot mode, the vehicle may also to function a certain way such as by operating at or below a certain speed limit designated for the depot (when operating manually or autonomously), using hazard or other lights to increase visibility of the vehicle, etc. hen in the third autonomous driving mode, the computing devices may operate vehicle 100 according to the configuration instructions in a way that allows an operator to interact with the vehicle and address any work orders generated for the vehicle by the server computing devices 410. For instance, a vehicle may report its status to the server computing devices 410 periodically. If there any issues with vehicle 100 that require service, the server computing devices 410 may assign the vehicle to a depot (i.e. send the vehicle to a depot) and generate a work order which is sent a computing device at the depot to allow an operator to address the service need. This may include calibrating vehicle 100's sensors, refueling (gas or recharging), making oil changes, correcting tire pressure, cooling the vehicle or sensors, cleaning (interior and/or exterior), software updates, map information updates, etc. In some examples, the computing devices may be configured to keep the vehicle in the third autonomous driving mode or prevent the vehicle from leaving the depot until all outstanding work orders for vehicle 100 are addressed. As another example, once all work orders are completed, vehicle 100 may automatically transition back into the second autonomous driving mode (if the vehicle was previously in this mode before transitioning into the third autonomous driving mode) or may only do so after an operator manually transitions the vehicle into another mode.

The third autonomous driving mode may include a geo-fencing aspect that prevents or limits the ability for vehicle 100 to be serviced when the vehicle's current location is not at or within a predetermined distance of a depot or a specific location within a depot. In this regard, this third autonomous driving mode may not activate itself, or is prohibited by the configuration instructions, unless vehicle 100 meets these geo-fencing requirements. In other words, vehicle 100 may transition into the third autonomous driving mode automatically as soon as the vehicle reaches a depot. In order to address situations in which vehicle 100 needs service at a location which does not meet these requirements, an operator may connect to the vehicle and using a laptop or other mobile computing device, connect directly to the vehicle's computing device in order to transition the vehicle into the third autonomous driving mode.

As noted above, the computing devices 110 may be configured to prevent "accidental engages" or "accidental disengages" of the autonomous driving modes . For instance, certain restrictions may be added to mode transitions via the configuration instructions from the manual driving mode to the second autonomous driving mode and from the second autonomous driving mode to the manual driving mode or simply to engage the second autonomous driving modes. As one example, when vehicle 100 is operating in the manual driving mode, if vehicle 100 is in motion, the system may not be allowed to transition into the second autonomous driving mode. A request to do so would be invalid as if vehicle 100 is already in motion, as a driver would be available. Similarly, if vehicle 100 is in an area that was not already included in the vehicle's map information or not sufficiently mapped, the vehicle may be prevented from transitioning into the first or second autonomous driving mode.

In another example, the when operating in the second autonomous driving mode, the configuration instructions may prevent vehicle 100 from transitioning directly into the first autonomous driving mode. This may be especially important in a situation where a human driver is not actually able to take control of vehicle 100.

As another example, the configuration instructions may include geo-fencing features. These geo-fencing features may be used by the computing device 110 to determine when to engage the manual or autonomous driving modes or specific configurations of these modes. For instance, a vehicle may only enter the second or third autonomous driving modes at or when vehicle 100 is within a predetermined distance of a depot or a specific location within a depot, whereas everywhere else, the vehicle may only transition into the manual or second autonomous driving mode. Similarly, vehicle 100 may not enter into the driverless transportation service or second configuration of the second autonomous driving mode if the vehicle is not within a predetermined distance of a depot or a specific location within a depot.

The configuration instructions may also prevent engages of the first or second autonomous driving modes without a specific type of human operator or passenger input, such as a press of a specific button or specific series of buttons. For instance, the computing devices may require a specific sequence of button presses to enter the first, second, or third autonomous driving modes. Ideally, this sequence may be selected to be complex enough to avoid an unauthorized person from taking control of vehicle 100 purposefully or by accident, but also simple and predictable enough that it could be easily performed by an operator. A further example may be to require specific authorization before allowing vehicle 100 to enter the second or third autonomous driving modes such as by signing in on a laptop with a password/code and/or security key and/or using a hardware dongle to plug into the vehicle and authenticate the operator using, for instance the sequence, before allowing the vehicle to transitioning modes. This may be especially useful if vehicle 100 is a personal (as opposed to a fleet vehicle) and can be used to confirm that the owner of the vehicle authorizes use of the second or third autonomous driving modes.

In another example, before transitioning into the manual driving mode from the second autonomous driving mode or the second autonomous driving mode to the manual driving mode, the configuration instructions may require that vehicle 100 meet a series of requirements such as being in park with the door open, at a specific location or area of the map information, with a door of the vehicle being open, recently calibrated sensors, specific software requirements, etc. Keeping the door open may prevent vehicle 100 from moving, i.e. by using a parking brake, during and after such transitions. In this regard, opening a door while the vehicle 100 is moving may cause the vehicle to come to a stop or pull over. Similarly, vehicle may only transition into the first or second autonomous driving mode if vehicle 100's sensors were calibrated within some specific time frame, such as within the last 100 miles or more or less and/or within the last 24 hours or more or less. In addition, the computing devices may be configured to only transition into the first or second autonomous driving mode after confirming that the corresponding software has been crytpographically signed.

The configuration instructions may also prevent vehicle 100 from transitioning into the second or third autonomous driving modes or leaving a depot based on instructions from the server computing devices 410. For instance, if vehicle 100 is not currently assigned to a specific staging locations (to wait for a trip assignment) or on a specific trip assignment, the computing devices may prevent vehicle 100 from leaving the depot. In this regard, vehicle 100 may be in a "holding pattern" at a depot until needed to provide transportation services. In other words, vehicle 100 may "refuse" to leave a depot until it is put "into service" by the server computing devices 410. This holding pattern may be a fourth configuration or the second autonomous driving mode, a configuration of the third autonomous driving mode, or a geo-fencing feature. This may prevent a third party from accessing or trying to take vehicle 100.

Moreover, any of the foregoing examples may be utilized together. For instance, when transitioning to the second or third autonomous driving modes, the safety monitor may require proximity to a specific depot, an open door, and a specific sequence of button presses.

In addition to the above, the memory 130 may also store instructions for a safety monitor which monitors communications between the control computing devices and other systems of vehicle 100. The safety monitor may operate using a secondary code library that runs alongside the primary vehicle control code at the control computing devices. The safety monitor maintains certain safety invariants. This may include, for instance, that in the first autonomous driving mode either all actuators (deceleration, acceleration, and steering) are in the autonomous driving mode or none are. This ensures that any actuator has the ability to return the whole system to manual driving mode. In other words, when operating in the first autonomous driving mode, if one actuator transitions to manual driving mode, this functions to transition the entire system, including all other actuators and the control computing devices into the manual driving mode.

In another example, the when operating in the second autonomous driving mode, the safety monitor may prevent vehicle 100 from transitioning into the manual or first autonomous driving mode. This may be especially important in a situation where a human driver is not actually able to take control of vehicle 100. The safety monitor may also prevent vehicle 100 from taking specific actions in the first autonomous driving mode, such as sudden maneuvers (U-turns, etc.) that may make it hard for a human driver to take control of the vehicle. By checking for these conditions, the safety monitor may operate to prevent inappropriate entry into or operations during the autonomous driving modes.

In addition to the operations described above and illustrated in the figures, various operations will now be described. It should be understood that the following operations do not have to be performed in the precise order described below. Rather, various steps can be handled in a different order or simultaneously, and steps may also be added or omitted.

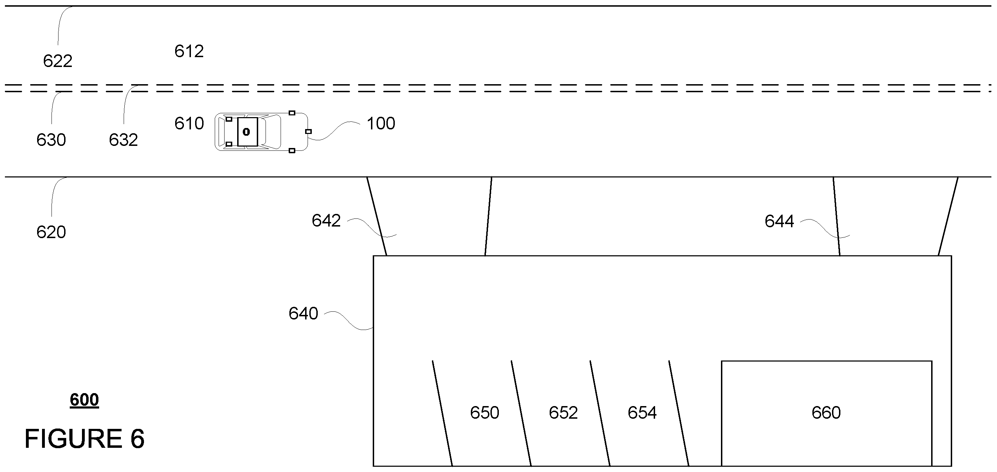

As an example, as shown in FIGURE 6, vehicle 100 is being operated in a manual driving mode on a portion of roadway 600 corresponding to the map information 200. For instance, FIGURE 6 includes lanes 610, 612 corresponding to lanes 210, 212, lane lines 620, 622, 630, 632 corresponding to lane lines 220, 222, 230, 232, depot 640 with entrance 642 and exit 644 corresponding to corresponding to depot 240 with entrance 242 and exit 244, parking spots 650-654 corresponding to parking spots 250-254, as well as maintenance area 660 corresponding to maintenance area 260.

In this manual driving mode, a driver is able to control the deceleration, acceleration, and steering of vehicle 100 at the input devices. As the driver controls these input devices, any commands from computing device 110 are ignored or invalidated by the actuators of the deceleration system 160, acceleration system 162, and steering system 164. Again, because of this, the driver is guaranteed that the self-driving system will not interfere with operation of vehicle 100.

At some point, the driver may want to transition from the manual driving mode into a first autonomous driving mode. This may be accomplished by having the driver push a specific button, push a series of buttons, use a lever or gear shift control, etc. In addition, vehicle 100 must also meet any transition requirements or geo-fencing requirements of the configuration instructions and/or safety monitor. Otherwise, the configuration instructions and/or safety monitor may prevent the transition into the first autonomous driving mode. Once in the first autonomous driving mode, the computing device 110 will control vehicle 100 according to the instructions of memory 130. In addition, the safety monitor may continuously confirm that in the first autonomous driving mode all actuators of the deceleration system 160, acceleration system 162, and steering system 164 are in the first autonomous driving mode. If any are not operating in the first autonomous driving mode, the safety monitor may transition such actuators into the first autonomous driving mode or transition vehicle 100 to the manual driving mode as a safety precaution.

As noted above, commands originating from the user input devices are given priority over commands from the computing devices 110. As such, the driver is able to transition vehicle 100 back to the manual driving mode by using any of the input devices of the vehicle. Again, the driver is guaranteed by both the control computing devices and the actuators that driver inputs will be prioritized over those of the control computing devices.

The driver may select to operate the first autonomous driving mode in various configurations. When in the first configuration, vehicle 100 may operate in a fully-autonomous driving mode in specific areas defined by the map information, but in semi-autonomous driving modes everywhere else. In the second configuration, the driver may use a user input device, such as a set of buttons or knob, to increase the sensitivity of vehicle 100 to transitions to manual driving mode. In this regard, the driver may change the amount of gripping force on the steering wheel, amount of change in the position of the steering wheel, amount of force or change in position of an accelerator pedal, amount of force or change in position of a brake pedal, etc. needed to transition vehicle 100 from the first autonomous driving mode to the manual driving mode.

The driver may also choose to operate vehicle 100 in a third configuration of the first autonomous driving mode in order to test the vehicle's operation in the first autonomous driving mode. When transitioning to the third configuration of the second autonomous driving mode, the change may occur both at the control computing device 110 as well as the actuators of the deceleration system 160, acceleration system 162, and steering system 164. Similarly, when the driver wants to transition back to the manual driving mode as discussed above, the transition again may occur at both the control computing device 110 as well as the actuators of the deceleration system 160, acceleration system 162, and steering system 164. As such, commands from the control computing devices which are improper are invalid and ignored.

When operating vehicle 100 in the first autonomous driving mode, the driver may not be able to transition to the second autonomous driving mode. Any such requests may be prohibited by the configuration instructions, safety monitor, or both.

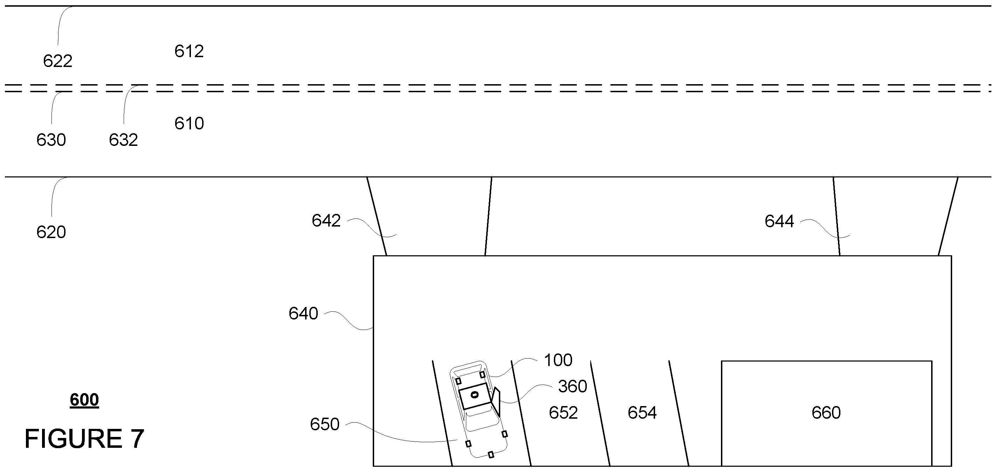

In order to operate vehicle 100 in the second autonomous driving mode, the vehicle must also meet any transition requirements or geo-fencing requirements of the configuration instructions and/or safety monitor. Using the examples above, vehicle 100 must be stopped, with the door open, and within a depot location while a human operator performs a series of button pushes to activate the second autonomous driving mode. In this regard, if the vehicle is moving as shown in FIGURE 6, vehicle 100 could not transition into the second autonomous driving mode, the configuration instructions and/or safety monitor may prevent the transition into the first autonomous driving mode. However, in the example of FIGURE 7, vehicle 100 is located within parking spot 650 of depot 640 with driver door 360 shown in the open position. As such, upon performing the proper series of button pushes, an operator may transition vehicle 100 into the second autonomous driving mode.

Once in the second autonomous driving mode, the computing devices 110 will control vehicle 100 according to the instructions of memory 130. In addition, the safety monitor may continuously confirm that in the second autonomous driving mode all actuators of the deceleration system 160, acceleration system 162, and steering system 164 are in the second autonomous driving mode. If any are not operating in the second autonomous driving mode, the safety monitor may transition such actuators into the second autonomous driving mode or cause vehicle 100 to come to a stop immediately. This may also prevent vehicle 100 from being transitioned from the second autonomous driving mode to the manual driving mode.

When in the second autonomous driving mode, both the actuators of the deceleration system 160, acceleration system 162, and steering system 164 and computing device 110 are configured via the configuration instruction to limit the impact of human inputs and transitions to the manual driving mode in order to guarantee the safety of passengers and vehicle 100. In this regard, a passenger of vehicle 100 may not ever be permitted to transition the vehicle directly from the second autonomous driving mode to the first autonomous driving mode.

The human operator may also select a configuration for the second autonomous driving mode. In one instance, the operator may select a first or second configuration using a laptop or other device as described above to provide transportation services to passengers or users of the transportation service as discussed above. The human operator may also select a third configuration for testing vehicle 100 which provides for the use of an "emergency stopping" button to immediately stop the vehicle in the event of a problem. For instance, the operator may load certain files, remove certain files, run certain commands, etc. or use a user interface to simply select or initiate the different configurations.

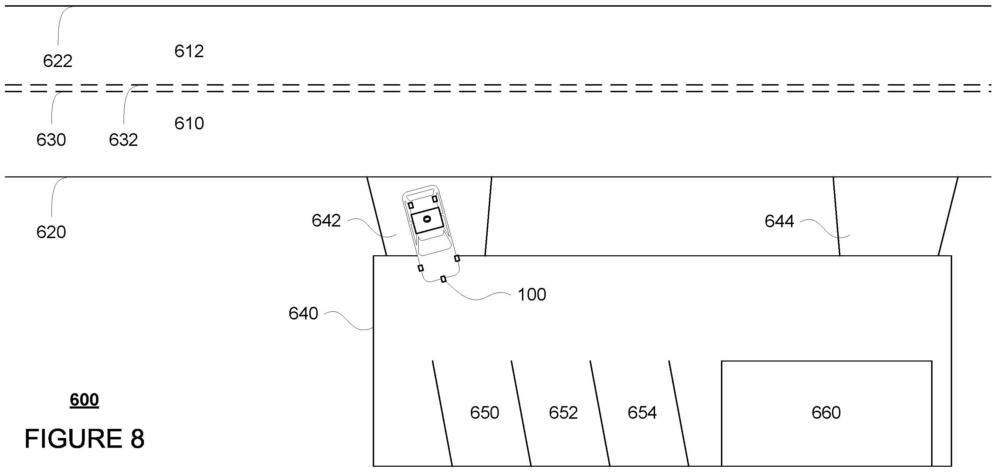

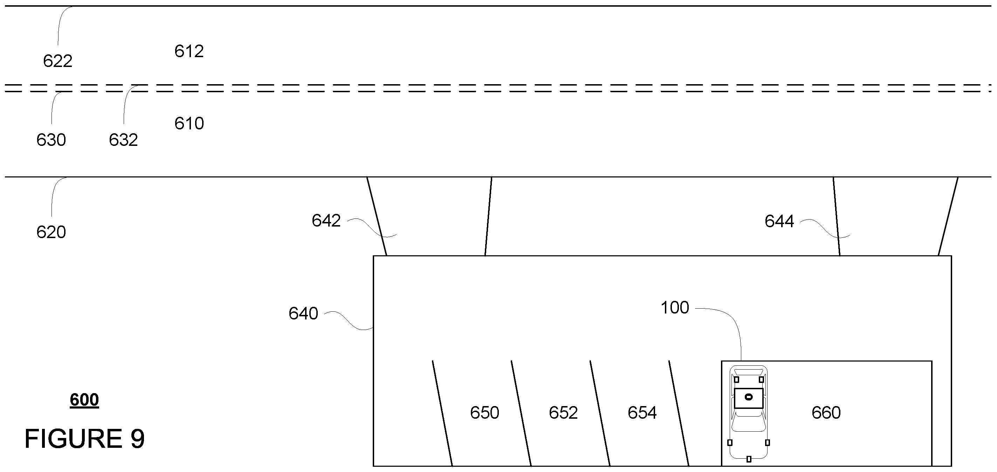

In some instances, vehicle 100 may require maintenance or other services. In this regard, the vehicle may transition into the third autonomous driving mode. This may occur as vehicle 100 approaches or enters a depot (or a specific location within a depot), or when a human operator "manually" transitions the vehicle to the third autonomous driving mode using a laptop or other mobile computing device connected directly to the computing device 110. For instance, turning to the example of FIGURE 8, vehicle 100 may automatically transition to the third autonomous driving mode when the vehicle enters depot 640 via entrance 642. In another example, vehicle 100 may automatically transition to the third autonomous driving mode when the vehicle is parked in a parking spot of the depot, such as parking spot 650 as shown in FIGURE 7. In a further example, vehicle 100 may automatically transition to the third autonomous driving mode when the vehicle enters or is parked within maintenance area 660 as shown in FIGURE 9. Alternatively, when in any of the locations of the examples of FIGURES 7-9, an operator may be able to transition the vehicle into the third autonomous driving mode. Similarly, if a vehicle requires maintenance and is stopped in a non-depot location, for instance, if vehicle 100 is stopped and positioned in lane 610 as shown in FIGURE 6, a human operator may connect directly to computing devices 110 with a mobile computing device in order to transition the vehicle into the third autonomous driving mode. When in the third autonomous driving mode, the computing device 110 may also control the vehicle 100 in order to allow the vehicle to be serviced according to any outstanding work orders for the vehicle.

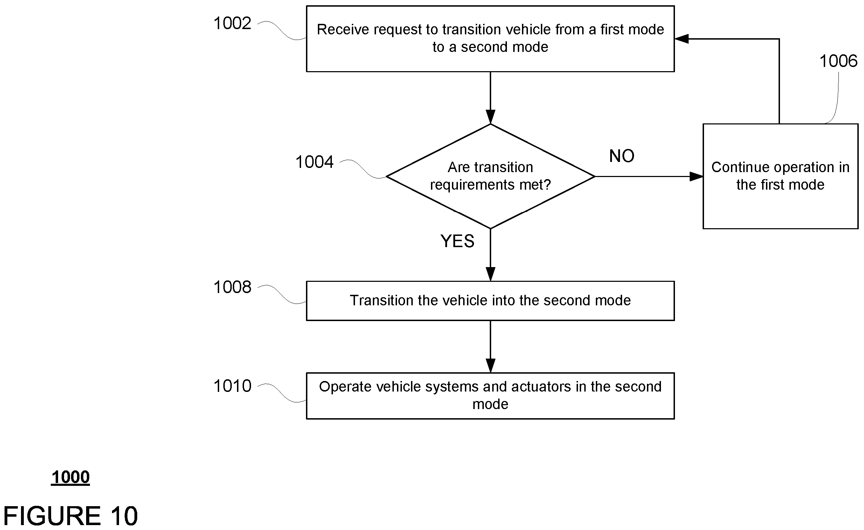

FIGURE 10 is an example flow diagram 1000 of some of the aspects discussed above which may be performed by one or more processors of one or more computing devices such as one or more processors 120 of computing device 110. For instance, at block 1002, processors 120 may receive a request to transition vehicle 100 from a first mode, such as the manual driving mode or one of the autonomous driving modes, to a second mode, such as the manual driving mode or one of the autonomous driving modes. This may be by a driver using a user input device, a human operator at a depot or some other location, by the secondary code library, etc. The processors 120 may then determine whether any specific requirements for the transition, such as location of the vehicle, a series of button presses, vehicle requirements (whether the vehicle is stationary or moving, whether a door is open, etc.), etc., are met at block 1004. If not, the processors 120 may continue to operate the vehicle in the first mode at block 1006 until another request is received at block 1002. If so, the vehicle may be transitioned to the second mode, or a particular configuration of the second mode, at block 1008. At the same time, the vehicle (and/or a laptop or other device connected to the vehicle) may display a notification indicating the current mode and/or configuration of the mode and/or whether a transition to a new mode or configuration was successful. The vehicle may then be operated by the processors 120 in the second mode at block 1010.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

The specification includes the following subject-matter expressed in the form of clauses 1-20.
1. A system comprising:
   one or more control computing devices configured to send commands to one or more actuators of a vehicle in order to control deceleration, acceleration, and steering of the vehicle, and wherein the vehicle includes one or more user input devices for allowing a driver to control the one or more actuators in order to control deceleration, acceleration, and steering of the vehicle;
   wherein the one or more control computing devices are configured to allow the vehicle to operate the vehicle in:
      a manual driving mode wherein a human operator controls the steering, braking and acceleration of the vehicle;
      a first autonomous driving mode wherein the one or more control computing devices are configured to send the commands to control one or more actuators and wherein inputs from the one or more user input devices are prioritized over the commands; and
      a second autonomous driving mode wherein the one or more control computing devices are configured to send the commands to control the one or more actuators and wherein inputs from commands are prioritized over the inputs from the one or more user input devices.
2. The system of clause 1, wherein the one or more computing devices are configured such that the first autonomous driving mode includes different requirements for entering than the second autonomous driving mode.
3. The system of clause 1, wherein the one or more computing devices are configured to prevent transitions from the manual driving mode to the second autonomous driving mode when the vehicle is in motion.
4. The system of clause 1, wherein the one or more computing devices are configured such that the first autonomous driving mode includes different requirements for transitioning to the manual driving mode than the second autonomous driving mode.
5. The system of clause 1, wherein the one or more computing devices are configured to transition from the first autonomous driving mode to the manual driving mode when any of the one or more actuators is operating in the manual driving mode.
6. The system of clause 5, wherein the one or more computing devices are configured such that when any of the one or more actuators is operating in the manual driving mode, the commands are ignored.
7. The system of clause 5, wherein the one or more actuators include a deceleration actuator configured to cause the vehicle to deceleration, an acceleration actuator configured to cause the vehicle to accelerate, and a steering actuator configured to change an orientation of the vehicle.
8. The system of clause 1, wherein the one or more computing devices are configured to prevent direct transitions from the first autonomous driving mode to the second autonomous driving mode.
9. The system of clause 1, wherein the one or more computing devices are configured to prevent direct transitions from the second autonomous driving mode to the first autonomous driving mode.
10. The system of clause 1, wherein the one or more computing devices are configured to operate the vehicle in a third autonomous driving mode which allows the vehicle to be serviced.
11. The system of clause 10, wherein the one or more computing devices are configured to operate the vehicle in the third autonomous driving mode based on a current location of the vehicle relative to a depot location.
12. The system of clause 11, wherein the one or more computing devices are configured to operate the vehicle in the third autonomous driving mode based whether the vehicle is at a specific location within the depot location.
13. The system of clause 11, wherein the one or more computing devices are configured to automatically transition the vehicle into the third autonomous driving mode when the vehicle reaches the depot location.
14. The system of clause 11, wherein the one or more computing devices are configured to prevent the vehicle from leaving the depot location until the one or more computing devices receive an instruction from a dispatching server computing device indicating that the vehicle is needed for providing transportation services.
15. The system of clause 1, wherein the one or more computing devices are configured to operate the vehicle in a first configuration of the second autonomous driving mode where the vehicle provides transportation services to passengers.
16. The system of clause 1, wherein the one or more computing devices are configured to operate the vehicle in a second configuration of the second autonomous driving mode where the vehicle provides transportation services using restrictions defined by a current status of the vehicle.
17. The system of clause 1, wherein the one or more computing devices are configured to allow transitions into the second autonomous driving mode only when a door of the vehicle is open.
18. The system of clause 1, wherein the manual driving mode is configured such that commands from the one or more control computing devices are invalidated and ignored by the one or more actuators.
19. The system of clause 1, further comprising the one or more user input devices.
20. The system of clause 1, further comprising the vehicle.

## Claims

1. A system comprising:
one or more control computing devices configured to send commands to one or more actuators of a vehicle in order to control deceleration, acceleration, and steering of the vehicle, and wherein the vehicle includes one or more user input devices for allowing a human operator to control the one or more actuators in order to control deceleration, acceleration, and steering of the vehicle;
wherein the one or more control computing devices are configured to allow the vehicle to operate the vehicle in:
a manual driving mode wherein a human operator controls the steering, braking and acceleration of the vehicle;
a first autonomous driving mode wherein the one or more control computing devices are configured to send the commands to control the one or more actuators and wherein inputs from the commands are prioritized over inputs from the one or more user input devices; and
a second autonomous driving mode wherein the one or more computing devices are configured to operate the vehicle in the second autonomous driving mode based on a current location of the vehicle relative to a depot location.

2. The system of claim 1, wherein the one or more control computing devices are configured to operate the vehicle in the second autonomous driving mode based on whether the vehicle is at a specific location within the depot location.

3. The system of claim 1 or 2, wherein the one or more control computing devices are configured to automatically transition the vehicle into the second autonomous driving mode when the vehicle reaches the depot location.

4. The system of any preceding claim, wherein the one or more control computing devices are configured to prevent the vehicle from leaving the depot location until the one or more control computing devices receive an instruction from a dispatching server computing device indicating that the vehicle is needed for providing transportation services.

5. The system of any preceding claim wherein, while the vehicle is in the second autonomous driving mode, the one or more control computing devices are configured to operate the vehicle at or below a speed limit designated for the depot and to use lights of the vehicle to increase the visibility of the vehicle.

6. The system of any preceding claim wherein, while the vehicle is in the second autonomous driving mode, the one or more control computing devices are configured to allow a human operator to interact with the vehicle to address work orders relating to issues with the vehicle that require service.

7. The system of claim 6 wherein, while the vehicle is in the second autonomous driving mode, the one or more control computing devices are configured to keep the vehicle in the second autonomous driving mode until all outstanding work orders for the vehicle are addressed.

8. The system of claim 6 wherein, while the vehicle is in the second autonomous driving mode in the depot, the one or more control computing devices are configured to prevent the vehicle from leaving the depot until all outstanding work orders for the vehicle are addressed.

9. The system of any preceding claim, wherein the one or more control computing devices are configured to require specific authorization before allowing the vehicle to enter the second autonomous driving mode.

10. The system of any preceding claim, wherein the one or more control computing devices are further configured to operate the vehicle in:
a third autonomous driving mode wherein the one or more control computing devices are configured to send the commands to control the one or more actuators and wherein inputs from the one or more user input devices are prioritized over the commands.

11. The system of claim 10, wherein the one or more control computing devices are configured such that the first autonomous driving mode includes different requirements for entering than the third autonomous driving mode.

12. The system of claim 10 or claim 11, wherein the one or more computing devices are configured such that the first autonomous driving mode includes different requirements for transitioning to the manual driving mode than the third autonomous driving mode.

13. The system of any preceding claim, wherein the manual driving mode is configured such that commands from the one or more control computing devices are invalidated and ignored by the one or more actuators.

14. The system of any preceding claim, further comprising the one or more user input devices.

15. The system of any preceding claim, further comprising the vehicle.
